# EUROPÄISCHE PATENTSCHRIFT

(11) **EP 3 304 802 B1**
(45) Veröffentlichungstag und Bekanntmachung des Hinweises auf die Patenterteilung: **02.11.2022**
(21) Anmeldenummer: 16723384.0
(22) Anmeldetag: 19.05.2016
(51) Int. Cl.: H04L 9/06, H04L 9/32

(54) **VERFAHREN ZUR SICHERSTELLUNG DER INFORMATIONSSICHERHEIT VON ÜBER EINEN DATENBUS ÜBERTRAGENEN DATEN SOWIE DATENBUSSYSTEM**
METHOD FOR SAFEGUARDING THE INFORMATION SECURITY OF DATA TRANSMITTED VIA A DATA BUS AND DATA BUS SYSTEM
PROCÉDÉ POUR ASSURER LA SÉCURITÉ D'INFORMATIONS DE DONNÉES TRANSMISES PAR LE BIAIS D'UN BUS DE DONNÉES AINSI QUE SYSTÈME DE BUS DE DONNÉES

(30) Priorität: 27.05.2015 DE 102015209709
(43) Veröffentlichungstag der Anmeldung: 11.04.2018
(73) Patentinhaber: Continental Automotive Technologies GmbH, 30165 Hannover (DE)
(72) Erfinder: MOLTER, Hans Gregor, 64291 Darmstadt (DE); STÖTTINGER, Marc, 65375 Oestrich-Winkel (DE)
(74) Vertreter: Continental Corporation
(86) Internationale Anmeldenummer: PCT/EP2016/061295
(87) Internationale Veröffentlichungsnummer: WO 2016/188859

(56) Entgegenhaltungen:
- WO-A1-2011/120573
- WO-A2-2006/086554
- JH SONG R POOVENDRAN UNIVERSITY OF WASHINGTON J LEE SAMSUNG ELECTRONICS T IWATA NAGOYA UNIVERSITY: "The AES-CMAC Algorithm; rfc4493.txt", 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/, INTERNET ENGINEERING TASK FORCE, IETF, CH, 1. Juni 2006 (2006-06-01), XP015054998, ISSN: 0000-0003
- Joan Daemen ET AL: "Permutation-based encryption, authentication and authenticated encryption Joint work with", DIAC - Directions in Authenticated Ciphers 2012, 5 July 2012 (2012-07-05), XP55213223, Stockholm, Sweden Retrieved from the Internet: URL:http://www.hyperelliptic.org/DIAC/slid es/PermutationDIAC2012.pdf [retrieved on 2015-09-14]

## Beschreibung

Kryptologische Verfahren sind bekannt aus WO 2006/086554 A2, WO 201 11120573 A1, "The AES-CMAC Algorithm;rtc4493.1xt" und aus "Permutation-based encryption, authentication and authenticated encryption" DIAC - Directions in Authenticated Ciphers 2012.

Die Erfindung betrifft ein Verfahren zur Sicherstellung der Informationssicherheit von über einen Datenbus übertragenen Daten gemäß Oberbegriff von Anspruch 1 sowie ein korrespondierendes Datenbussystem von Anspruch 13.

Um die Vertraulichkeit von Nachrichten zu wahren, werden diese in an sich bekannter Weise mittels kryptographischer Verfahren verschlüsselt. Der daraus entstehende Chiffretext kann dann nicht mit einfachen Mitteln durch einen Dritten gelesen werden. Gängige Industrieverfahren sind im Bereich der symmetrischen Kryptographie - Sender und Empfänger benutzen den gleichen geheimen Schlüssel - zum Beispiel AES (Advanced Encryption Standard) und im Bereich der asymmetrischen Kryptographie - Sender und Empfänger besitzen jeweils ungleiche Schlüsselpaare, bestehend aus privatem und öffentlichem Schlüssel - beispielsweiser RSA (Rivest, Shamir und Adleman). Zu diesen Verfahren existieren diverse Protokollschichten, welche zur Verschlüsselung und/oder auch zur Sicherstellung der Authentizität genutzt werden. Nachteil dieser Verfahren ist, dass in der Regel nur große Datenpakete effizient verarbeitet werden können und/oder das man in zwei getrennten Teilschritten die Eingangsdaten verschlüsseln und signieren muss, wobei letzteres die Authentizität sicherstellen soll.

Aufgabe der vorliegenden Erfindung ist es daher, ein Verfahren bereitzustellen, mittels welchem die Kommunikation über einen Datenbus vertraulich (nicht lesbar für einen Angreifer) und authentisch (Sender der Daten ist bekannt) realisiert werden kann.

Diese Aufgabe wird durch das erfindungsgemäße Verfahren gemäß Anspruch 1 sowie das erfindungsgemäße Datenbussystem gemäß Anspruch 13 gelöst.

Die Erfindung beschreibt ein Verfahren zur Sicherstellung der Informationssicherheit von über einen Datenbus übertragenen Daten, bei dem über den Datenbus von einem Sender an zumindest einen Empfänger zu übertragende Daten vor dem Absenden in Datenblöcke aufgeteilt werden und die Datenblöcke mittels einer Schwammkonstruktion zur Bildung einer kryptologischen Hashfunktion unter Hinzuziehung eines Schlüssels blockweise verschlüsselt und/oder signiert und in der Weise erzeugte Chiffre-Blöcke über den Datenbus an den zumindest einen Empfänger übertragen werden.

Schwammkonstruktionen repräsentieren eine Klasse kryptologischer Hashfunktionen, welche aus einem eingehenden Bitstrom beliebiger Länge einen ausgehenden Bitstrom beliebiger Länge produzieren können, wobei Schwammkonstruktionen dabei eine Mehrzahl an internen Zuständen aufweisen, welche jeweils zumindest zwei Teile umfassen: eine sogenannte Rate und eine sog. Kapazität. Ein Zustand wird auf einen nachfolgenden Zustand, unter Aufnahme eines Datenblocks, mittels einer durch die Schwammkonstruktionen umfassten Schwammfunktion abgebildet. Eine in dieser Weise vorgenommene Verarbeitung aller Datenblöcke wird häufig Aufsaugphase der Schwammkonstruktion bzw. des Schwamms und eine Phase, in welcher die Ausgabe erfolgt, wird häufig als Auspressphase bezeichnet. Erfolgt ein wechselweises Aufsaugen und Auspressen, wird von einer Duplex-Schwammkonstruktion gesprochen. Der Schlüssel ist dabei vorzugsweise geheim, also im Wesentlichen nur dem Sender und dem zumindest einen Empfänger bekannt. Die Blocklänge der Datenblöcke sowie die Schlüssellänge des Schlüssels stellen bevorzugt vorgebbare Parameter der jeweiligen Implementierung dar. Bei dem Bussystem handelt es sich um ein System zur Datenübertragung zwischen mehreren Teilnehmern, welches eine 1 zu N Kommunikation (ein Sender und eine Mehrzahl Empfänger) unterstützt. Häufig kann dabei jeder Teilnehmer in der Kommunikation als Sender sowie Empfänger auftreten. Beispiele für diese Art der Bussysteme im automobilen Bereich sind CAN-Bus oder BroadR-Reach.

In vorteilhafter Weise kann durch die Erfindung die Informationssicherheit insbesondere von vergleichsweise kleinen Datenpaketen sichergestellt werden, wodurch die Kommunikation über einen Datenbus vertraulich und authentisch realisiert werden kann. Weiterhin kann das erfindungsgemäße Verfahren effizienter als beispielsweise das bekannte AES-CMAC Verfahren ausgeführt werden, da weniger AES-Operationen bei der hier vorgestellten Lösung gegenüber dem AES-CMAC Verfahren anfallen. Für eine Verschlüsselung und Signierung von n Datenblöcken würde das AES-CMAC Verfahren 2n+3 AES Operationen benötigen, während das erfindungsgemäße Verfahren in vorteilhafter Weise lediglich 2n+2 AES-Operationen braucht.

Einer vorteilhaften Ausführungsform der Erfindung zufolge erfolgt die blockweise Verschlüsselung der Datenblöcke und blockweise Erzeugung der Chiffre-Blöcke während einer Phase der Einbeziehung der Datenblöcke. Ein Chiffre-Block wird dabei vorteilhafterweise unmittelbar bei und unter Einbezug eines jeweiligen Datenblocks generiert. Einzelne verschlüsselte Datenblöcke bzw. Chiffre-Blöcke stehen somit bereits vor Abschluss der gesamten Verschlüsselung zur weiteren Verarbeitung zur Verfügung.

Mittels der Schwammkonstruktion wird im Anschluss an die Verschlüsselung der Datenblöcke und Erzeugung der Chiffre-Blöcke bevorzugt eine Signatur auf Basis der zu übertragenden Datenblöcke und des Schlüssels generiert und über den Datenbus übermittelt. Durch die Signatur kann die Urheberschaft und Integrität der übertragenen Datenblöcke durch den oder die Empfänger überprüft werden. Zudem kann die Verschlüsselung der Daten als auch die Generierung der zugeordneten Signatur in einem gemeinsamen Durchlauf erfolgen.

Bevorzugt wird ein interner Anfangs- bzw. Initialisierungszustand der Schwammkonstruktion mit dem Schlüssel initialisiert. Üblicherweise erfolgt eine Initialisierung des Initialisierungszustands mit Null und der Schlüssel wird anschließend mittels Exklusiv-Oder-Verknüpfung aufgenommen. Durch die unmittelbare Initialisierung des Initialisierungszustands mit dem Schlüssel wird eine verbesserte Rechenleistung erzielt und Ressourcen eingespart.

Entsprechend einer bevorzugten Weiterbildung der Erfindung weist ein interner Zustand der Schwammkonstruktion eine Rate und eine Kapazität auf, wobei ein Inhalt eines Chiffre-Blocks für eine Rate eines jeweils nachfolgenden internen Zustands der Schwammkonstruktion herangezogen wird. In vorteilhafter Weise bilden der geheime Schlüssel selbst und/oder die jeweiligen Chiffre-Blöcke Grundlage der weiteren Verschlüsselung nachfolgender Datenblöcke. Dadurch wird sichergestellt, dass inhaltlich identische Datenblöcke keine Bildung inhaltlich identischen Chiffre-Blöcke zur Folge hat. Dies verhindert sogenannte "Known Ciphertext" Angriffe, bei denen bekannte Chiffre-Blöcke auf einen unbekannten Datenstrom angewendet werden, um so Kenntnisse über die ursprünglichen Datenblöcke zu gewinnen. Desweiteren werden durch diese Vorgehensweise "Replay" Angriffe, bei denen zuvor aufgezeichnete Chiffre-Blöcke erneut in den Kommunikations-Datenstrom eingespielt werden. Durch die Nutzung des intern sich verändernden geheimen Zustandes müssen keine zusätzlichen Zählerwerte oder zeitbasierten Daten über den Bus geschickt werden, um die Aktualität der Chiffre-Blöcke auf der Empfängerseite zu validieren. Die Schwammkonstruktion ermöglicht durch den gleichen internen Zustand von Sender und Empfänger eine implizite Synchronisation, wodurch keine explizite Synchronisation bei diesem Signaturverfahren benötigt wird, was insbesondere zur Sicherstellung der Informationssicherheit von über einen Datenbus übertragenen Daten von Vorteil ist. Durch diesen Synchronisationsmechanismus, der die eingehende und ausgehende Nachricht nutzt, wird die Anzahl der über den Bus gesendeten Daten reduziert und somit eine bessere Busauslastung erzielt.

Ein Chiffre-Block wird vorzugsweise aus einer Rate eines internen Zustands unter Hinzuziehung eines Datenblocks bestimmt. Die Rate stellt im Falle des ersten internen Zustands bzw. Initialisierungszustands einen Teil des Schlüssels und im Falle eines nachfolgenden internen Zustands eine mittels wenigstens einer durch die Schwammkonstruktion umfassten Schwammfunktion berechnete Rate dar. Auf diese Weise wird unter Anderem der Vorteil erzielt, dass der Schlüssel und/oder der bereits mittels der Schwammfunktion permutierte und/oder transformierte interne Zustand zur Verschlüsselung eines jeweiligen Datenblocks herangezogen werden.

Getreu einer Weiterbildung der Erfindung wird ein Chiffre-Block unter Hinzuziehung eines Datenblocks aus einer aus dem Schlüssel hervorgehenden Rate oder einer mittels einer Schwammfunktion berechneten Rate mittels Exklusiv-Oder-Verknüpfung bestimmt.

Die Schwammkonstruktion weist zweckmäßigerweise wenigstens eine Schwammfunktion auf, welche einen internen Zustand auf einen nachfolgenden internen Zustand abbildet, wobei die Schwammfunktion unter Verwendung wenigstens eines Substitutions-Permutations-Netzwerks gebildet wird. Dadurch kann eine verbesserte Ressourcenausnutzung aufgrund der möglichen Parallelisierung sowie eine Vermeidung der Umkehrbarkeit der Verschlüsselung ermöglicht werden.

Bevorzugt ist das Substitutions-Permutations-Netzwerk mittels einer Blockchiffre realisiert. Insbesondere ist die Blockchiffre eine Blockverschlüsselung und/oder eine Blockentschlüsselung. Ein Vorteil davon ist, dass sowohl für die Verschlüsselung als auch die Entschlüsselung eines Datenblockes nur die Verschlüsselungsfunktion der intern genutzten Blockchiffre benötigt wird. Dadurch ist weniger Programmspeicher bei der Implementierung notwendig und der Aufwand für die Qualitätssicherung im Falle einer Quelltext Prüfung wird verringert. Bevorzugt basiert die Blockverschlüsselung auf Basis des Advanced Encryption Standard. Der Advanced Encryption Standard stellt einen Standard dar, welcher derzeit als praktisch sicher angesehen wird und ohne Einschränkung implementiert werden darf.

Ein erster Teil eines internen Zustands der Schwammfunktion als zu verschlüsselnde Daten und ein zweiter Teil des internen Zustands der Schwammfunktion als Schlüssel zugeführt wird.

Der zweite Teil eines internen Zustands der Schwammkonstruktion wird bevorzugt einem weiteren Substitutions-Permutations-Netzwerk der Schwammfunktion als zu verschlüsselnde Daten und der erste Teil des internen Zustands dem Substitutions-Permutations-Netzwerk als Schlüssel zugeführt.

Die Schwammfunktion bildet bevorzugt einen internen Zustand auf einen nachfolgenden internen Zustand ab, wobei zusätzlich zumindest ein Datenblock mittels einer Exklusiv-Oder-Verknüpfung aufgenommen wird. Weiterhin wird bei einem Übergang von einem internen Zustand auf einen nachfolgenden internen Zustand vorzugsweise wenigstens ein Chiffre-Block unter Heranziehung zumindest eines Datenblocks generiert.

Entsprechend einer Weiterbildung der Erfindung erfolgt die Übertragung der Chiffre-Blöcke über den Datenbus bevorzugt im Anschluss an die Verschlüsselung aller Datenblöcke und Bildung der Signatur oder blockweise jeweils im Anschluss an die Verschlüsselung eines einzelnen Datenblocks. Die Signatur S kann im Falle mehrerer zu übertragender Nachrichten bzw. Datenblöcke für diese mehreren Nachrichten bzw. Datenblöcke gemeinsam erstellt werden. Entsprechend der zweiten Ausführungsform wird eine on-the-fly Verschlüsselung und unmittelbar anschließende Übermittlung der jeweiligen verschlüsselten Daten erzielt, wobei im Anschluss bevorzugt ebenfalls die Signatur erzeugt und übermittelt werden kann. Diese Vorgehensweise ermöglicht eine effiziente sequenzielle Entschlüsselung der verschlüsselten und übertragenen Daten durch den oder die Empfänger, womit kürzere Latenzzeiten realisiert werden können.

Die Länge eines Datenblocks entspricht zweckmäßigerweise der Länge eines Datenrahmens oder der Länge der Nutzdaten eines Datenrahmens eines zugrundeliegenden Datenbusprotokolls des Datenbusses oder die Länge eines Datenrahmens eines Datenbusprotokolls des Datenbusses entspricht einem Vielfachen der Länge eines Datenblocks. Beispielsweise im Falle einer CAN-Nachricht kann diese vollständig oder deren Nutzdatenfeld somit einen separaten Datenblock bilden, welcher verschlüsselt wird. Anstelle der unverschlüsselten CAN-Nachrichten werden auf diese Weise die verschlüsselten Chiffre-Blöcke mittels CAN-Bus übertragen.

Die Erfindung betrifft weiterhin ein Datenbussystem, umfassend einen Sender, wenigstens einen Empfänger und zumindest ein Kommunikationsmittel zur Kommunikation zwischen dem Sender und dem wenigstens einen Empfänger, wobei das Datenbussystem derart ausgestaltet ist, dass dieses das erfindungsgemäße Verfahren ausführen kann. Ein das erfindungsgemäße Verfahren ausführendes kryptographisches Datenbussystem kann vorteilhafterweise nicht erfolgreich mit üblichen Seitenkanalangriffen, wie beispielsweise Rechenzeitangriff oder Analyse der Leistungsaufnahme, attackiert werden, da durch den kontinuierlichen Aktualisierungsprozess der Kapazität und der Rate des internen Zustandes, welche dann als Schlüssel für die Verschlüsselung verwendet werden, für jede vorgenommene Verschlüsselung ein neuer Schlüssel verwendet wird. Für eine Analyse müsste mit einer Seitenkanalmessung pro Verschlüsselungsvorgang versucht werden den aktuellen Wert des internen Zustandes zu ermitteln. Um signifikante statistische Auswertungen auf den internen Zustand anzuwenden, werden jedoch mehrere Seitenkanalmessungen benötigt. Aufgrund der unterschiedlichen Schlüssel für jeden Verschlüsselungsvorgang kann eine solche Analyse nicht erfolgreich durchgeführt werden. Die Blockverschlüsselung weist daher bevorzugt eine konstante und werteunabhängige Laufzeit auf.

Weitere bevorzugte Ausführungsformen ergeben sich aus den Unteransprüchen und der nachfolgenden Beschreibung von Ausführungsbeispielen an Hand von Figuren.

Es zeigen:
- Fig. 1: ein Ausführungsbeispiel einer Schwammkonstruktion zur Verschlüsselung und Signierung gemäß der Erfindung,
- Fig. 2: eine beispielhafte schematische Darstellung einer Schwammfunktion f zur Abbildung eines internen Initialisierungszustands sᵢ auf einen nachfolgenden internen Zustand sᵢ₊₁,
- Fig. 3: ein Ausführungsbeispiel des erfindungsgemäßen Verfahrens, bei dem eine Übermittlung der verschlüsselten Datenblöcke M₀...Mₙ einer oder mehrerer Datenbus-Nachrichten im Anschluss an die Verschlüsselung aller Blöcke erfolgt und
- Fig. 4: ein Ausführungsbeispiel des erfindungsgemäßen Verfahrens, bei dem eine on-the-fly Übermittlung der verschlüsselten Datenblöcke bzw. Chiffre-Blöcke C₀...Cₙ einer oder mehrerer Datenblöcke M₀...Mₙ im Anschluss an die Verschlüsselung vorgenommen wird.

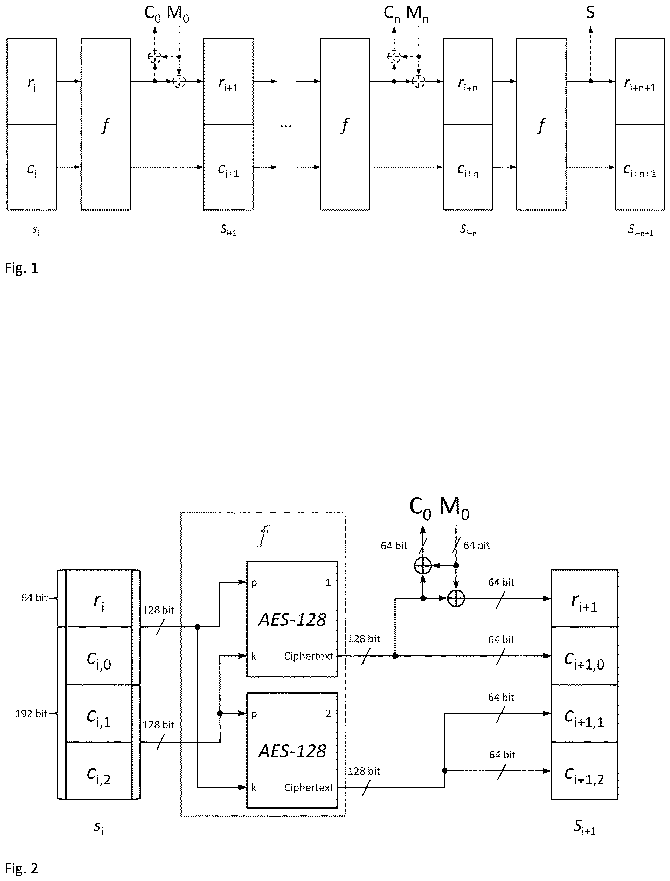

Zur Verschlüsselung einer beispielsweise über einen Datenbus eines Fahrzeugs zu sendenden Nachricht wird eine in Fig. 1 gezeigte Schwammkonstruktion, wie sie beispielsweise für kryptologische Hashfunktionen-Familie von SHA-3 (Keccak) bekannt sind, herangezogen. Die zu verschlüsselnde Nachricht wird dabei zunächst in Blöcke M₀...Mₙ gleicher Länge aufgeteilt und der internen Initialisierungszustand sᵢ mit einem geheimen Schlüssel initialisiert. Schwammfunktion f bildet einen internen Zustand s_{i...}sᵢ₊ₙ jeweils auf einen nachfolgenden Zustand s_{i+1...}sᵢ₊ₙ₊₁ ab und stellt dabei eine geeignete Permutation oder Transformation dar. Die Zustände s_{i...}sᵢ₊ₙ₊₁ sind dabei jeweils in einen Teil rᵢ, als Rate bezeichnet, und einen Teil cᵢ, der als Kapazität bezeichnet wird, aufgeteilt. Die mit gestrichelten Pfeilen dargestellten Maßnahmen dienen erfindungsgemäß der blockweisen Verschlüsselung und Signatur-Generierung, wobei bei einem Übergang von einem internen Zustand sᵢ...sᵢ₊ₙ auf einen nachfolgenden internen Zustand s_{i...}sᵢ₊ₙ₊₁ die Datenblöcke M₀...Mₙ jeweils mittels Exklusiv-Oder-Verknüpfung ⊕ aufgenommen und verschlüsselte Chiffre-Blöcke C₀...Cₙ ausgegeben werden. Zur Bildung eines Chiffre-Blocks C₀...Cₙ wird ein jeweiliger Datenblock M₀...Mₙ mit einer durch eine jeweilige Permutationsfunktion gebildeten Rate rᵢ₊₁...rᵢ₊ₙ mittels Exklusiv-Oder ⊕ verknüpft. Im Anschluss an die Phase der Verschlüsselung der Datenblöcke M₀...Mₙ und Generierung Chiffre-Blöcke C₀...Cₙ wird Signatur S ausgegeben. Die Chiffre-Blöcke C₀...Cₙ entsprechen somit der Rate rᵢ₊₁...rᵢ₊ₙ des jeweils nachfolgenden Zustands, weshalb insbesondere zur Vermeidung der Ausführung mehrerer Exklusiv-Oder-Verknüpfungen während eines Übergangs, die berechnete Rate rᵢ₊₁...rᵢ₊ₙ alternativ auch nach Aufnahme des jeweiligen Datenblocks M₀...Mₙ als Chiffre-Block C₀...Cₙ ausgegeben werden kann.

Dieses generelle Prinzip lässt sich für einen Datenbus eines Fahrzeugs, beispielsweise einen CAN-Bus oder BroadR-Reach, anwenden, indem feste Bitgrößen und eine konkrete Schwammfunktion f gewählt werden.

Fig. 2 zeigt am Beispiel des Übergangs vom Initialisierungszustand sᵢ= rᵢ||cᵢ auf Zustand sᵢ₊₁ = rᵢ₊₁||cᵢ₊₁ beispielhafte Parameterwerte sowie Schwammfunktion f, welche durch die AES-Netzwerke (Advanced Encryption Standard) 1 und 2 gebildet wird. Wie bereits beschrieben, wird Initialisierungszustand sᵢ mit einem gemeinsamen geheimen 256-Bit Schlüssel der kommunizierenden Busteilnehmer initialisiert, wobei jeweils 128-Bit den Eingängen P der AES-Netzwerke 1 und 2 zugeführt werden und als Schlüssel K jeweils die weiteren 128-Bit Verwendung finden. Dementsprechend werden die ersten 128-Bit mit den letzten 128-Bit des Zustands sᵢ verschlüsselt und umgekehrt. Die AES-Netzwerke 1 und 2 geben jeweils 128-Bit verschlüsselte Daten - Ciphertext - aus. Die ersten 64-Bit des solchermaßen verschlüsselten Initialisierungsschlüssels werden unter Einbeziehung von Datenblock M₀ mittels Exklusiv-Oder-Verknüpfung als Chiffre-Block C₀ ausgegeben und als Rate rᵢ₊₁ für Zustand sᵢ₊₁ vorgesehen. Die weiteren ausgegebenen 192-Bit finden als Kapazität c_{i+1,0}...c_{i+1,2} für Zustand sᵢ₊₁ Anwendung.

Die Größen der Datenblöcke M₀...Mₙ sind entsprechend dieses Ausführungsbeispiels so gewählt, dass jeweils die Nutzdaten einer einzelnen CAN-Nachricht (= 8 Byte = 64 Bit) verschlüsselt werden können. Eine CAN-Nachrichtenlänge ist also identisch zur Blockgröße eines Datenblocks M₀...Mₙ. Anstelle der unverschlüsselten CAN-Nachrichten werden somit die verschlüsselten Chiffre-Blöcke C₀...Cₙ mittels CAN-Bus übertragen. Alternativ stellt eine CAN-Nachrichtenlänge ein Vielfaches der Größe eines Datenblocks M₀...Mₙ dar. Zusätzlich können für alle Ausführungsformen auch Fülldaten vorgesehen werden (Padding). Um Signatur S zu übertragen, wird vorzugsweise zusätzlich wenigstens eine weitere CAN-Nachricht über den Datenbus übermittelt. Alternativ zu den AES-128 Operationen können andere Funktionen bzw. Verschlüsselungsalgorithmen herangezogen werden. Weiterhin können andere Parameter, beispielsweise für die Rate r, Kapazität c und die Schlüsselgröße, verwendet werden.

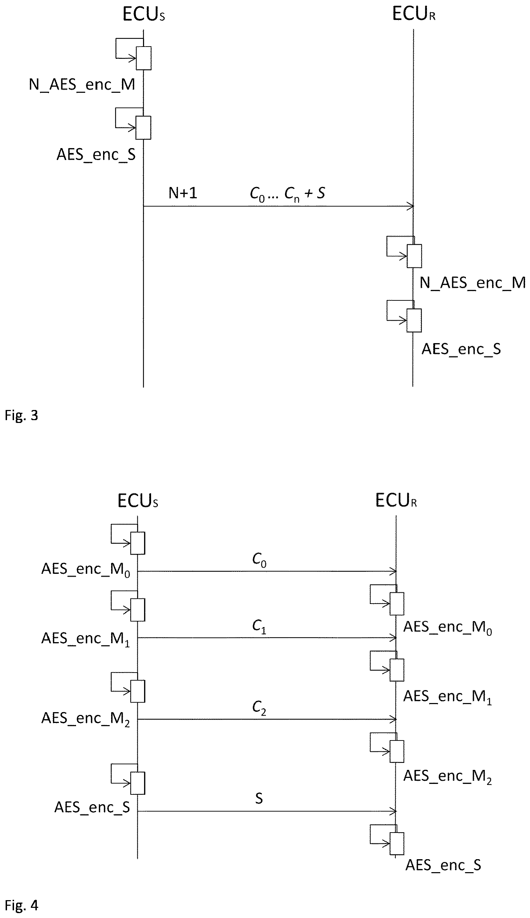

Die Übermittlung der Chiffre-Blöcke C₀...Cₙ von einem sendenden Busteilnehmer ECU_{S} an einen empfangenden Busteilnehmer ECU_{R} kann nach kompletter Verschlüsselung und Bildung von Signatur S, wie für das Ausführungsbeispiel der Fig. 3 gezeigt, oder aber auch on-the-fly, wie für das Ausführungsbeispiel der Fig. 4 gezeigt, erfolgen. Insbesondere durch letzteres Verfahren werden kurze Latenzzeiten sichergestellt.

Entsprechend dem Ausführungsbeispiel der Fig. 1 erfolgt eine Übermittlung der Chiffre-Blöcke C₀...Cₙ einer oder mehrerer Nachrichten im Anschluss an die Verschlüsselung aller Blöcke N_AES_enc_M sowie der Bildung der zugehörigen Signatur AES_enc_S, wobei Signatur S im Falle mehrerer CAN-Nachrichten für diese mehreren Nachrichten gemeinsam erstellt werden kann. Dies wird bevorzugt mittels eines dedizierten Speichers realisiert. Beispielsweise werden N 8-Byte CAN-Nachrichten verschlüsselt und eine zugeordnete 8-Byte Signatur S dieser erstellt. Anschließend erfolgt die Übermittlung von N+1 CAN-Nachrichten (N Chiffre-Blöcke + Signatur S) über den CAN-Datenbus an ECU_{R}. ECU_{R} dechiffriert die Nachrichten N_AES_enc durch Ausführung der identischen Operation und verifiziert die Integrität und Authentizität AES_enc_S der empfangenen Nachrichten mittels Signatur S.

Entsprechend dem Ausführungsbeispiel der Fig. 4 wird eine on-the-fly Verschlüsselung AES_enc_M₀...AES_enc_M₂ von CAN-Nachrichten und unmittelbar anschließende Übermittlung der jeweiligen verschlüsselten CAN-Nachricht bzw. des Datenblocks vorgenommen, wobei im Anschluss Signatur S erzeugt AES_enc_S und ebenfalls übermittelt wird. Effizient sequenziell entschlüsselt (AES_enc_M₀...AES_enc_M₂) Empfänger ECU_{R} bereits die empfangenen CAN-Nachrichten, wobei eine Verifikation AES_enc_S im Anschluss an den Empfang der Signatur S erfolgt.

## Patentansprüche

1. Verfahren zur Sicherstellung der Informationssicherheit von über einen Datenbus übertragenen Daten, bei dem die über den Datenbus von einem Sender (ECUs) an zumindest einen Empfänger (ECU_{R}) zu übertragende Daten vor dem Absenden in Datenblöcke (M₀...Mₙ) aufgeteilt werden, wobei
die Datenblöcke (M₀...Mₙ) mittels einer Schwammkonstruktion und einer Schwammfunktion, welche einen internen Zustand auf einen nachfolgenden internen Zustand abbildet, wobei die Schwammfunktion unter Verwendung wenigstens eines Substitutions-Permutations-Netzwerks gebildet wird, wobei ein erster Teil eines internen Zustands der Schwammfunktion als zu verschlüsselnde Daten und ein zweiter Teil des internen Zustands der Schwammfunktion als Schlüssel zugeführt wird, zur Bildung einer kryptologischen Hashfunktion unter Hinzuziehung eines Schlüssels blockweise verschlüsselt und/oder signiert und in der Weise erzeugte Chiffre-Blöcke (C₀...Cₙ) über den Datenbus an den zumindest einen Empfänger übertragen werden,
wobei ein interner Zustand (si...si+n) der Schwammkonstruktion eine Rate (ri...ri+n+1) und eine Kapazität (ci...ci+n+1) aufweist, wobei ein Inhalt eines Chiffre-Blocks (C0...Cn) einer Rate (ri+1...ri+n) eines jeweils nachfolgenden internen Zustands (si+1...si+n+1) der Schwammkonstruktion herangezogen wird.

2. Verfahren gemäß Anspruch 1, **dadurch gekennzeichnet, dass** die blockweise Verschlüsselung der Datenblöcke (M₀...Mₙ) und blockweise Erzeugung der Chiffre-Blöcke (C₀...Cₙ) während einer Phase der Einbeziehung der Datenblöcke (M₀...Mₙ) erfolgt.

3. Verfahren gemäß Anspruch 1 oder 2, **dadurch gekennzeichnet, dass** mittels der Schwammkonstruktion im Anschluss an die Verschlüsselung der Datenblöcke (M₀...Mₙ) und Erzeugung der Chiffre-Blöcke (C₀...Cₙ) eine Signatur (S) auf Basis der zu übertragenden Datenblöcke (M₀...Mₙ) und des Schlüssels generiert und über den Datenbus übermittelt wird.

4. Verfahren gemäß einem der vorhergehenden Ansprüche, **dadurch gekennzeichnet, dass** ein Initialisierungszustand (*sᵢ*) der Schwammkonstruktion mit dem Schlüssel initialisiert wird.

5. Verfahren gemäß einem der Ansprüche 1-4, **dadurch gekennzeichnet, dass** ein Chiffre-Block (C₀...Cₙ) aus einer Rate (rᵢ₊₁...rᵢ₊ₙ) eines internen Zustands (sᵢ...sᵢ₊ₙ) unter Hinzuziehung eines Datenblocks (M₀...Mₙ) bestimmt wird.

6. Verfahren gemäß Anspruch 4 oder 5, **dadurch gekennzeichnet, dass** ein Chiffre-Block (C₀...Cₙ) unter Hinzuziehung eines Datenblocks (M₀...Mₙ) aus einer aus dem Schlüssel hervorgehenden Rate oder einer mittels einer Schwammfunktion (f) berechneten Rate (rᵢ₊₁...rᵢ₊ₙ) mittels Exklusiv-Oder-Verknüpfung (⊕) bestimmt wird.

7. Verfahren gemäß Anspruch 5 oder 6, **dadurch gekennzeichnet, dass** die Schwammkonstruktion wenigstens eine Schwammfunktion (f) aufweist, welche einen internen Zustand (sᵢ...sᵢ₊ₙ) auf einen nachfolgenden internen Zustand (sᵢ₊₁...sᵢ₊ₙ₊₁) abbildet, wobei die Schwammfunktion (f) unter Verwendung wenigstens eines Substitutions-Permutations-Netzwerks (1,2) gebildet wird.

8. Verfahren gemäß Anspruch 7, **dadurch gekennzeichnet, dass** das Substitutions-Permutations-Netzwerk mittels einer Blockchiffre insbesondere auf Basis des Advanced Encryption Standard (AES) realisiert ist.

9. Verfahren gemäß wenigstens einem der Ansprüche 5 bis 8, **dadurch gekennzeichnet, dass** ein erster Teil eines internen Zustands (sᵢ...sᵢ₊ₙ) der Schwammfunktion (f) als zu verschlüsselnde Daten und ein zweiter Teil des internen Zustands (sᵢ...sᵢ₊ₙ) der Schwammfunktion (f) als Schlüssel zugeführt wird.

10. Verfahren gemäß Anspruch 9, **dadurch gekennzeichnet, dass** der zweite Teil eines internen Zustands (sᵢ...sᵢ₊ₙ) der Schwammkonstruktion einem weiteren Substitutions-Permutations-Netzwerk (1,2) der Schwammfunktion (f) als zu verschlüsselnde Daten und der erste Teil des internen Zustands (sᵢ₊₁...Sᵢ₊ₙ₊₁) dem Substitutions-Permutations-Netzwerk (1,2) als Schlüssel zugeführt wird.

11. Verfahren gemäß einem der vorhergehenden Ansprüche, **dadurch gekennzeichnet, dass** die Übertragung der Chiffre-Blöcke (C₀...Cₙ) über den Datenbus im Anschluss an die Verschlüsselung aller Datenblöcke (M₀...Mₙ) und Bildung der Signatur (S) oder blockweise jeweils im Anschluss an die Verschlüsselung eines einzelnen Datenblocks (M₀...Mₙ) erfolgt.

12. Verfahren gemäß einem der vorhergehenden Ansprüche, **dadurch gekennzeichnet, dass** die Länge eines Datenblocks (M₀...Mₙ) der Länge eines Datenrahmens oder der Länge der Nutzdaten eines Datenrahmens eines zugrundeliegenden Datenbusprotokolls des Datenbusses entspricht oder die Länge eines Datenrahmens eines Datenbusprotokolls des Datenbusses entspricht einem Vielfachen der Länge eines Datenblocks (M₀...Mₙ).

13. Datenbussystem, umfassend einen Sender (ECU_{S}), wenigstens einen Empfänger (ECU_{R}) und zumindest ein Kommunikationsmittel zur Kommunikation zwischen dem Sender und dem wenigstens einen Empfänger, welches derart ausgestaltet ist, dass dieses ein Verfahren gemäß einem der Ansprüche 1 bis 12 ausführen kann.

## Claims

1. Method for safeguarding the information security of data transmitted via a data bus, in which the data to be transmitted via the data bus from a transmitter (ECUs) to at least one receiver (ECU_{R}) are divided into data blocks (M₀...Mₙ) before being sent off, wherein the data blocks (M₀...Mₙ) are encrypted and/or signed block by block by means of a sponge construction and a sponge function which maps an internal state onto a following internal state, wherein the sponge function is formed by using at least one substitution permutation network, wherein a first part of an internal state of the sponge function is supplied as data to be encrypted and a second part of the internal state of the sponge function is supplied as key, for forming a cryptological hash function, utilizing a key, and cipher blocks (C₀...Cₙ) generated in this way are transmitted via the data bus to the at least one receiver, wherein an internal state (si... si+n) of the sponge construction has a rate (ri... ri+n+1) and a capacity (ci... ci+n+1), wherein a content of a cipher block (C0...Cn) of a rate (ri+1... ri+n) of a respectively following internal state (si+1 ... si+n+1) of the sponge construction is utilized.

2. Method according to Claim 1, **characterized in that** the block-by-block encryption of the data blocks (M₀...Mₙ) and block-by-block generation of the cipher blocks (C₀...Cₙ) takes place during a phase of the inclusion of the data blocks (M₀...Mₙ).

3. Method according to Claim 1 or 2, **characterized in that**, following the encryption of the data blocks (M₀...Mₙ) and generation of the cipher blocks (C₀...Cₙ), a signature (S) is generated by means of the sponge construction on the basis of the data blocks (M₀...Mₙ) to be transmitted and of the key and transmitted via the data bus.

4. Method according to one of the preceding claims, **characterized in that** an initialization state (sᵢ) of the sponge construction is initialized with the key.

5. Method according to one of Claims 1-4, **characterized in that** a cipher block (C₀...Cₙ) is determined from a rate (rᵢ₊₁... rᵢ₊ₙ) of an internal state (sᵢ...sᵢ₊ₙ), using a data block (M₀...Mₙ).

6. Method according to Claim 4 or 5, **characterized in that** a cipher block (C₀...Cₙ) is determined by utilizing a data block (M₀...Mₙ) from a rate obtained from the key or a rate (rᵢ₊₁... rᵢ₊ₙ) calculated by means of a sponge function (f), by means of Exclusive-OR logic (⊕)(.

7. Method according to Claim 5 or 6, **characterized in that** the sponge construction has at least one sponge function (f) which maps an internal state (sᵢ...sᵢ₊ₙ) onto a following internal state (sᵢ₊₁...Sᵢ₊ₙ₊₁), the sponge function (f) being formed by using at least one substitution permutation network (1, 2).

8. Method according to Claim 7, **characterized in that** the substitution permutation network is implemented by means of a block-cipher, particularly based on the Advanced Encryption Standard (AES).

9. Method according to any one of Claims 5 to 8, **characterized in that** a first part of an internal state (ₛᵢ... sᵢ₊ₙ) of the sponge function (f) is supplied as data to be encrypted and a second part of the internal state (ₛᵢ... sᵢ₊ₙ) of the sponge function (f) is supplied as key.

10. Method according to Claim 9, **characterized in that** the second part of an internal state (sᵢ... sᵢ₊ₙ) of the sponge construction is supplied to a further substitution permutation network (1, 2) of the sponge function (f) as data to be encrypted and the first part of the internal state (sᵢ₊₁ ... Sᵢ₊ₙ₊₁) is supplied to the substitution permutation network (1, 2) as key.

11. Method according to one of the preceding claims, **characterized in that** the transmission of the cipher blocks (C₀...Cₙ) via the data bus occurs following the encryption of all data blocks (M₀...Mₙ) and formation of the signature (S) or block-by-block in each case following the encryption of an individual data block (M₀...Mₙ).

12. Method according to one of the preceding claims, **characterized in that** the length of a data block (M₀...Mₙ) corresponds to the length of a data frame or to the length of the payload data of a data frame of a basic data bus protocol of the data bus or the length of a data frame of a data bus protocol of the data bus corresponds to a multiple of the length of a data block (M₀...Mₙ).

13. Data bus system comprising a transmitter (ECUs), at least one receiver (ECU_{R}) and at least one communication means for communication between the transmitter and the at least one receiver, which is designed in such a manner that it can carry out a method according to one of Claims 1 to 12.

## Revendications

1. Procédé permettant d'assurer la sécurité informatique des données transmises par le biais d'un bus de données, dans lequel les données à transmettre par le biais du bus de données d'un émetteur (ECUs) à au moins un récepteur (ECU_{R}) sont réparties avant leur envoi en blocs de données (M₀ ... Mₙ),
dans lequel, au moyen d'une construction éponge et d'une fonction éponge qui mappe un état interne sur un état interne suivant, la fonction éponge étant formée en utilisant au moins un réseau de substitution-permutation, une première partie d'un état interne étant fournie à la fonction éponge sous forme de données à crypter, et une deuxième partie de l'état interne étant fournie à la fonction éponge sous forme de clé, les blocs de données (M₀ ... Mₙ) sont cryptés et/ou signés bloc par bloc en ayant recours à une clé en vue de former une fonction de hachage cryptologique, et les blocs de chiffré (C₀ ... Cₙ) ainsi générés sont transmis par le biais du bus de données audit au moins un récepteur,
dans lequel un état interne (si ... si+n) de la construction éponge présente un taux (ri ... ri+n+1) et une capacité (ci ... ci+n+1), dans lequel on a recours à un contenu d'un bloc de chiffré (C0 ... Cn) ayant un taux (ri+1 ... ri+n) d'un état interne (si+1 ... si+n+1) respectivement suivant de la construction éponge.

2. Procédé selon la revendication 1, **caractérisé en ce que** le cryptage bloc par bloc des blocs de données (M₀ ... Mₙ) et la génération bloc par bloc des blocs de chiffré (C₀ ... Cₙ) sont effectués pendant une phase d'inclusion des blocs de données (M₀ ... Mₙ).

3. Procédé selon la revendication 1 ou 2, **caractérisé en ce qu'**au moyen de la construction éponge, suite au cryptage des blocs de données (M₀ ... Mₙ) et à la génération des blocs de chiffré (C₀ ... Cₙ), une signature (S) est générée sur la base des blocs de données (M₀ ... Mₙ) à transmettre et de la clé et est transmise par le biais du bus de données.

4. Procédé selon l'une quelconque des revendications précédentes, **caractérisé en ce qu'**un état d'initialisation (sᵢ) de la construction éponge est initialisé à l'aide de la clé.

5. Procédé selon l'une quelconque des revendications 1 à 4, **caractérisé en ce qu'**un bloc de chiffré (C₀ ... Cₙ) est déterminé à partir d'un taux (rᵢ₊₁ ... rᵢ₊ₙ) d'un état interne (sᵢ ... sᵢ₊ₙ) en ayant recours à un bloc de données (M₀ ... Mₙ).

6. Procédé selon la revendication 4 ou 5, **caractérisé en ce qu'**un bloc de chiffré (C₀ ... Cₙ) est déterminé en ayant recours à un bloc de données (M₀ ... Mₙ) à partir d'un taux ressortant de la clé ou d'un taux (rᵢ₊₁... rᵢ₊ₙ) calculé au moyen d'une fonction éponge (f) au moyen d'une liaison OU exclusif (⊕).

7. Procédé selon la revendication 5 ou 6, **caractérisé en ce que** la construction éponge présente au moins une fonction éponge (f) qui mappe un état interne (sᵢ ... sᵢ₊ₙ) sur un état interne suivant (sᵢ₊₁ ... sᵢ₊ₙ₊₁), la fonction éponge (f) étant formée en utilisant au moins un réseau de substitution-permutation (1, 2).

8. Procédé selon la revendication 7, **caractérisé en ce que** le réseau de substitution-permutation est réalisé au moyen d'un chiffrage de bloc en particulier sur la base du standard de chiffrement avancé (AES).

9. Procédé selon au moins l'une des revendications 5 à 8, **caractérisé en ce qu'**une première partie d'un état interne (sᵢ ... sᵢ₊ₙ) est fournie à la fonction éponge (f) sous forme de données à crypter, et une deuxième partie de l'état interne (sᵢ ... sᵢ₊ₙ) est fournie à la fonction éponge (f) sous forme de clé.

10. Procédé selon la revendication 9, **caractérisé en ce que** la deuxième partie d'un état interne (sᵢ ... sᵢ₊ₙ) de la construction éponge est fournie à un autre réseau de substitution-permutation (1, 2) de la fonction éponge (f) sous forme de données à crypter, et la première partie de l'état interne (sᵢ₊₁ ... sᵢ₊ₙ₊₁) est fournie au réseau de substitution-permutation (1, 2) sous forme de clé.

11. Procédé selon l'une quelconque des revendications précédentes, **caractérisé en ce que** la transmission des blocs de chiffré (C₀ ... Cₙ) est effectuée par le biais du bus de données suite au cryptage de tous les blocs de données (M₀ ... Mₙ) et à la formation de la signature (S) ou bloc par bloc respectivement suite au cryptage d'un seul bloc de données (M₀ ... Mₙ).

12. Procédé selon l'une quelconque des revendications précédentes, **caractérisé en ce que** la longueur d'un bloc de données (M₀ ... Mₙ) correspond à la longueur d'une trame de données ou à la longueur des données utiles d'une trame de données d'un protocole de bus de données sous-jacent du bus de données, ou la longueur d'une trame de données d'un protocole de bus de données correspond à un multiple de la longueur d'un bloc de données (M₀ ... Mₙ).

13. Système de bus de données, comprenant un émetteur (ECUs), au moins un récepteur (ECU_{R}) et au moins un moyen de communication pour la communication entre l'émetteur et ledit au moins un récepteur qui est configuré de telle sorte qu'il peut exécuter un procédé selon l'une quelconque des revendications 1 à 12.
